# EUROPEAN PATENT SPECIFICATION

(11) **EP 2 402 636 B1**
(45) Date of publication and mention of the grant of the patent: **09.04.2014**
(21) Application number: 09840679.6
(22) Date of filing: 27.02.2009
(51) Int. Cl.: F16L 3/205

(54) **DEVICE FOR SUPPORTING INDUSTRIAL PIPELINES**
VORRICHTUNG ZUR ABSTÜTZUNG VON INDUSTRIELLEN ROHRLEITUNGEN
DISPOSITIF DE SUPPORT DE CONDUITES INDUSTRIELLES

(43) Date of publication of application: 04.01.2012
(73) Proprietor: Juntas Y Compensadores, S.L., 48013 Bilbao (ES)
(72) Inventor: ZULOAGA IBARRONDO, Rafael, E-48013 Bilbao (ES)
(74) Representative: Urteaga Simarro, José Antonio
(86) International application number: PCT/ES2009/000104
(87) International publication number: WO 2010/097483

(56) References cited:
- FR-A- 1 297 264
- FR-A1- 2 233 556
- GB-A- 534 940
- US-A- 2 675 977
- US-A- 4 023 756
- US-A- 4 634 088

## Description

### Technical Field of the Invention

The present invention is comprised in the field of devices used in industrial installations for supporting the pipes which hang or are supported in a fixed structure.

### Background of the Invention

To prevent tensions in the support of industrial pipe systems, it is necessary to use supports designed to allow the controlled movements of the system, which can occur due to thermal expansion, shifts, movements or vibrations of the pipe and of other components of the installation. The supports must meet all the requirements of operation loads, temperatures and shift ranges which are usual in the pipe systems of industrial plants.

The supports can be constant-load or variable-load supports.

Constant-load supports provide the ideal solution for compensating for the shifts caused by thermal expansion. The loads corresponding to the pipe are constantly absorbed and transferred, without significant deviations along their path. Significant deviations would act as additional damaging and uncontrolled loads in the system. In such case, the anchoring points and the pipe system itself would be at special risk due to the forces and moments greater than the admissible ones.

The operating principle of constant-load supports are based on the interaction of forces of various metal springs which act directly on the suspended load through a central load tube. The load is adjusted by means of the prestressing regulation of the main spring. The useful path varies according to the load variations.

Variable supports are used to compensate for slight vertical shifts in the pipes. The operation of these supports is based on using coil springs which exert a variable load.

Supports of this type are described, for example, in patents US 5 018 700, US 4 613 119 and WO 02/08651

There are also other solutions on the market, such as Japanese patent JP 06-137466 for example, which combines the use of a spring and an air damper, for the purpose of preventing or controlling the vibrations occurring in a pipe.

Another type of solution is Japanese patent JP 11-257541 for example, which describes a pipe support comprising an elastic block made of hard rubber which absorbs the vertical movements of the pipe. This support is suitable for absorbing large vibrations occurring in pipes as a consequence of sudden stressing such as an earthquake for example.

Patent no. US4023756 describes an alternative solution consisting in a thermopneumatic support device for providing support to pipes or other objects subject to temperature changes and changes in position. The support device utilizes part of the heat energy of the pipe in order to provide the necessary power to move the pipe over a range of positions along a longitudinal direction defined by various guide lugs. Specifically, the support device comprises a reservoir and a variable-volume actuating chamber, filled by a fluid; the fluid temperature is related to the pipe temperature, so that when the pipe temperature increases the fluid temperature increases, therefore increasing the pressure and causing the actuating chamber to expand and, therefore, move the pipe along the longitudinal direction.

All these solutions, springs, dampers and elastic block only allow, to a greater or lesser extent, the absorption of the vertical movements of the pipe. In other words, they are suitable for absorbing vibrations occurring in an installation, however, supports of these types are incapable of absorbing other movements which can occur in any other direction.

Furthermore, in the supports using springs, the working capacity of the system depends on the force exerted by the spring on the pipe. This force depends on the elongation distance of the spring. When the pipe is in a normal position, i.e., there has been no vertical shift, the elongation distance is maximum, therefore the force of the spring will also be maximum and, therefore, the stresses withstood by the system are minimal. However, when the pipe shifts vertically, the elongation distance is smaller and thus the force of the spring is also smaller and, as a consequence, the stresses and tensions that the system must withstand increase and, therefore, the risk of the anchors breaking increases.

On the other hand, the supports using elastic blocks, in addition to only being able to absorb the vibrations, have another drawback derived from the need to arrange or change the mentioned block depending on the stressing required by the system, since the block will have different features depending on the stress that the system must withstand.

It would therefore be convenient to be able to have a support which is capable of absorbing the load requirements, moments and vibrations, as well as any other type of movement or variation occurring in a pipe.

In addition to allowing the absorption of movements occurring in any direction, the system object of the invention also achieves that the stresses and tensions withstood by the system are always the same. Furthermore, the system also allows adapting to the needs required by the installation at all times, without needing significant changes in the components that form part of the system.

In addition to covering the needs for supporting the required pipes, the device for supporting pipes proposed by the present invention provides advantages which are very important in the operation thereof, with a higher precision as a result of the simplification of the constant stress and of its precision, obtained by maintaining the air pressure, in addition to other improvements such as:
- Simple maintenance.
- Incomparable capacity to absorb movements and vibrations.
- Design and dimensions without limits (settlements, earthquakes, etc.).
- Resistance to extreme environments (corrosion, dryness, high temperature differences, etc.)
- Cost-effective installation.

### Description of the Invention

The device object of the invention, uses a perfectly tight elastic element containing therein a pressurized fluid, which is fitted in a set of flanges, which will provide the capacity to absorb the shifts in any direction occurring in a pipe.

The device described in this invention comprises:
- fixing means for fixing to a fixed structure,
- securing means for a pipe,
- an elastic element located between the fixing means for fixing to the fixed structure and the securing means for the pipe,
wherein the elastic element is arranged between a first flange attached to a first support member and a second flange attached to a second support member, the elastic element being configured by an impermeable and elastic body of revolution open at its upper and lower base, through which bases it is attached to the first flange and to the second flange, configuring a closed and hermetic volume containing a pressurized fluid.

The elastic element is made of rubber and, as has been indicated, it is configured by a body of revolution open at its upper and lower base, though which it is hermetically attached to the first and second flange. Different alternatives for attaching the elastic element to the flanges can be considered, one of which could be, for example, using a disc screwed to each of the flanges, between which an inner circumferential edge of the open bases of the elastic element is trapped. Another solution can consist of the elastic element having a circumferential edge towards the outside in its open bases, in which case the attachment can be carried out by means of hoops screwed to the flanges, such that the outer rib is trapped between the hoop and the flange. A third solution can consist of providing, on the opposite faces of the flanges between which the elastic element is located, a rib with a groove in which the inner edge of the open base of the elastic element can be housed.

The first and second flange have an elongated configuration, with a widened central part and two counterposed perforated tabs. These flanges can be positioned perpendicularly to one another, such that each of the flanges is attached by means of at least one pair of rods to one of the support members. In order to carry this out, the support members have holes which are opposite the holes of the perforated tabs of the flanges, in which holes the ends of the rods are fixed.

The attachment of the elastic element to the fixing means for fixing to the fixed structure and to the securing means for the pipe can be indistinctly carried out through the first support member and the second support member. In other words, the first support member can be attached to the fixing means for fixing to the structure, whereas the second support member can be attached to the securing means for the pipe. Another option could be that the first support member is attached to the securing means for the pipe and the second support member is attached to the fixing means for fixing to the fixed structure.

Both support means can be identical in size and shape, having a diametric projection, partition or rib provided with a through hole serving for the attachment, by means of rings, snap hooks or any other means allowing the attachment to be articulated, to the fixing means for fixing to the fixed structure and to the securing means for the pipe. Evidently, these support means could have a different configuration.

This attachment of the flanges, between which the elastic element is arranged, to the support means determines a rigid structure in which the elastic element always works under compression.

The rods can be threaded and they can be fastened to the flanges and support members by means of a nut-counternut. Other solutions could also be possible.

As occurs in other suspended supports, the pipe hangs from a bar comprising the elements necessary for securing the pipe. In the present invention, the pipe hands from a tie rod, or any other means, which is attached at one end to the securing means for the pipe and attached at the other end, in an articulated manner, to the elastic element indistinctly through the first and second support member.

The attachment of the tie rod to the pipe is carried out with the collaboration of a yoke to which the ends of a clamp surrounding the pipe are fixed. The tie rod to the elastic element is attached in an articulated manner to said yoke indistinctly through the first or second support member.

The pressurized fluid contained inside the elastic element could be a gas. On the other hand, the elastic element can contain a fixed and constant amount of pressurized fluid. In this case, the pressure inside the elastic element varies depending on its deformation due to the stresses that it has to absorb. The pressure inside the elastic element is calculated depending on the needs of the system and the support acts as variable-load type supports.

However, it is also possible for the elastic element to be connected to an equalizing outer valve for maintaining the internal pressure constant. Depending on the pressure existing inside the elastic element, the valve allows the entrance or leakage of gas, for the purpose of maintaining the pressure inside the elastic element constant.

Another possibility is to control at all times the pressure of the support according to the needs of the installation, making it have more or less pressure independently of the solution of the pipe.

The elastic element could be connected to an outer valve, so that the latter supplies the pressure required at all times to the elastic element.

### Description of the Drawings

To complete the description and for the purpose of aiding to better understand the features of the invention according to a preferred embodiment thereof, a set of drawings is attached as an integral part of said description, in which the following has been depicted with an illustrative and non-limiting character:
Figure 1 shows a front view of the device object of the invention.

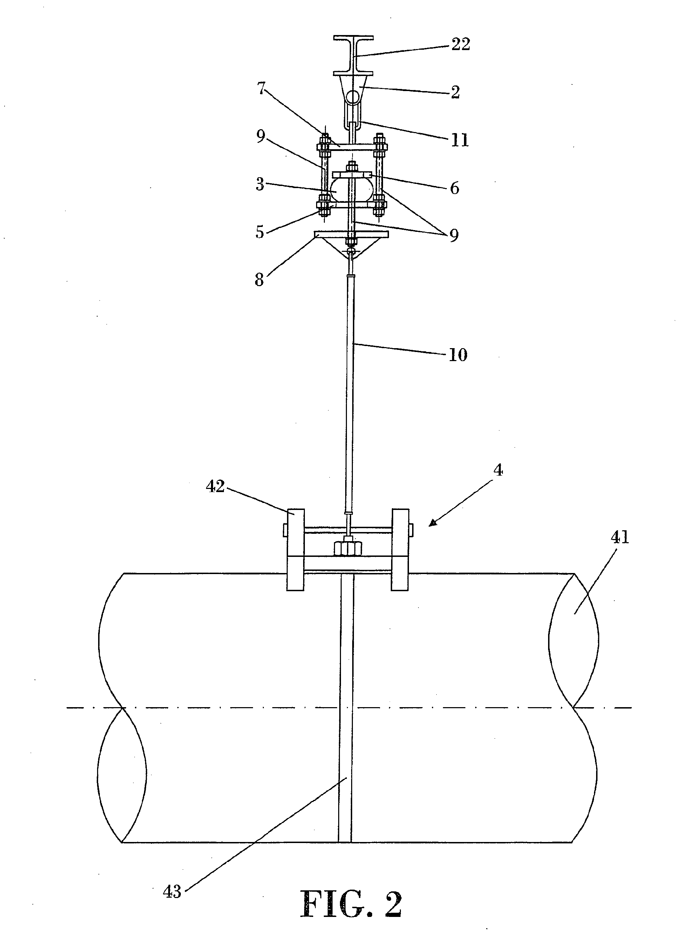

Figure 2 shows a side view of the device object of the invention.
Figure 3 shows an enlarged detail of the assembly formed by the elastic element, the flanges and the support members
Figure 4 shows an elevational, plan and side view of the first support member.
Figure 5 shows an elevational, plan and side view of the second support member.
Figure 6 shows a plan view of the first and second flange.
Figure 7 shows a first version of the elastic element configured by a body of revolution, with a wheel shape, with the bases open and with an inner circumferential rib in the bases.
Figure 8 shows a second version of the elastic element configured by a body of revolution, with a bellows shape and an outer perimetric rim in the bases.

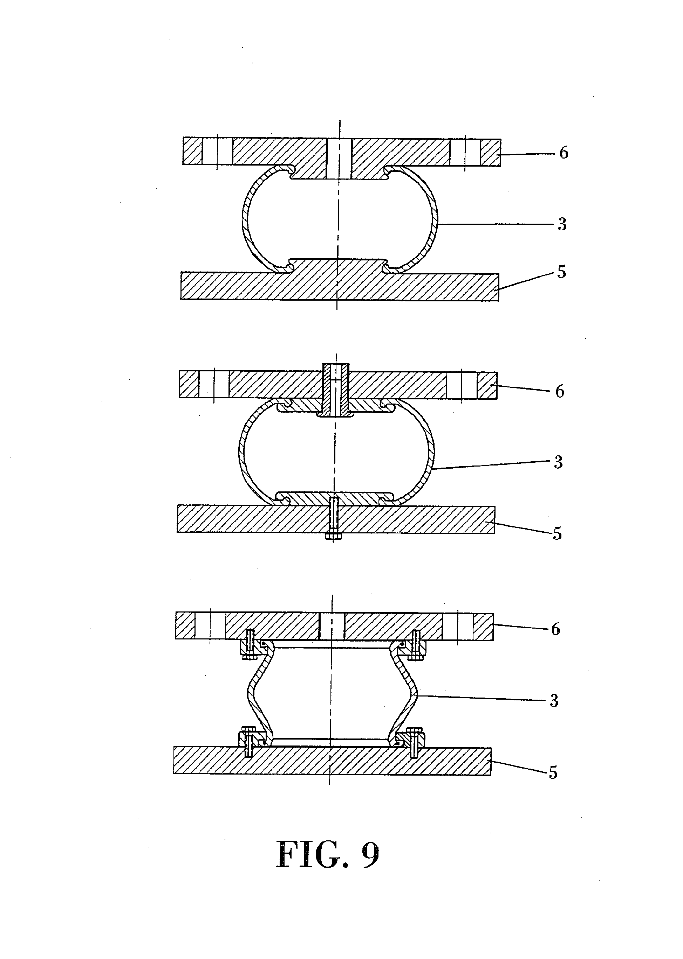

Figure 9 shows three possible alternatives for fastening the elastic element to the flanges.
Figure 10 shows an exploded perspective view of the assembly formed by the elastic element, the flanges and the support members.

### Preferred Embodiment of the Invention

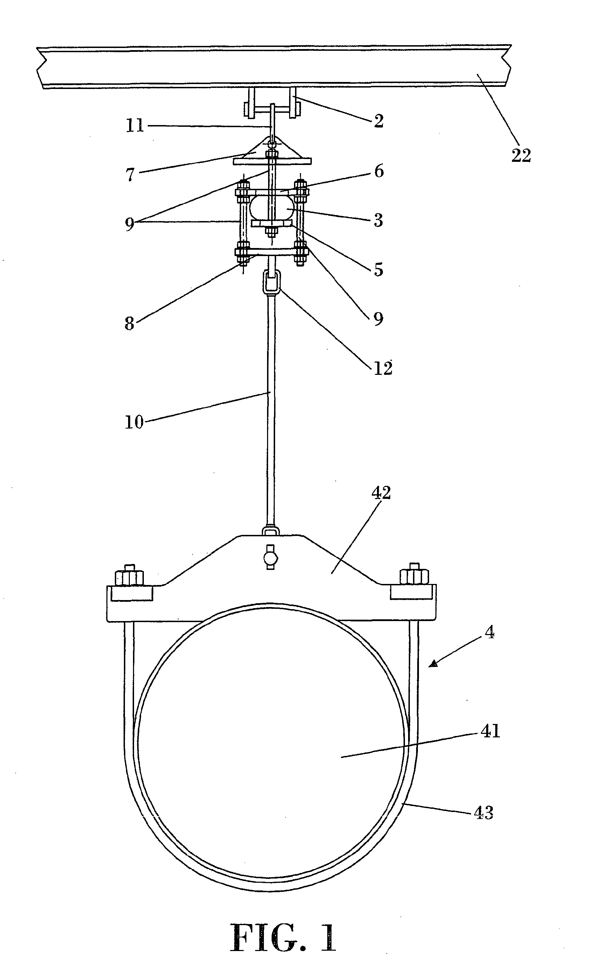

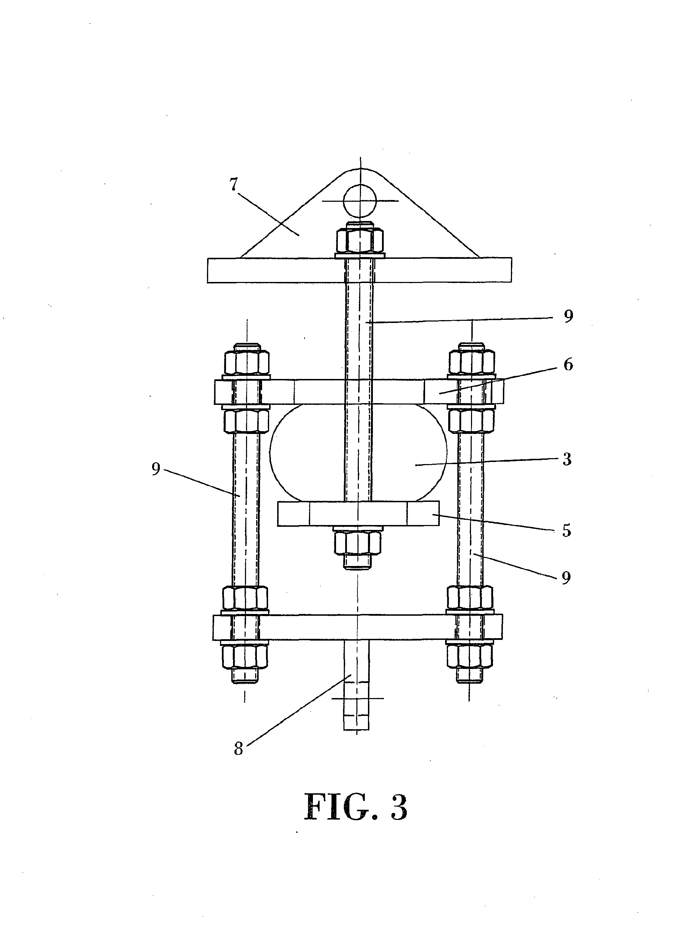

Figure 1 shows the device (1) for supporting industrial pipes, object of invention, which comprises fixing means (2) for fixing to a fixed structure (22), securing means (4) for the pipe (41) and an elastic element (3) located between the fixing means (2) and the securing means (4). As can be observed in Figure 3, this elastic element (3) is arranged between a first flange (5) attached to a first support member (7) through a pair of rods (9) and a second flange (6) attached to a second support member (8) through another pair of rods (9).

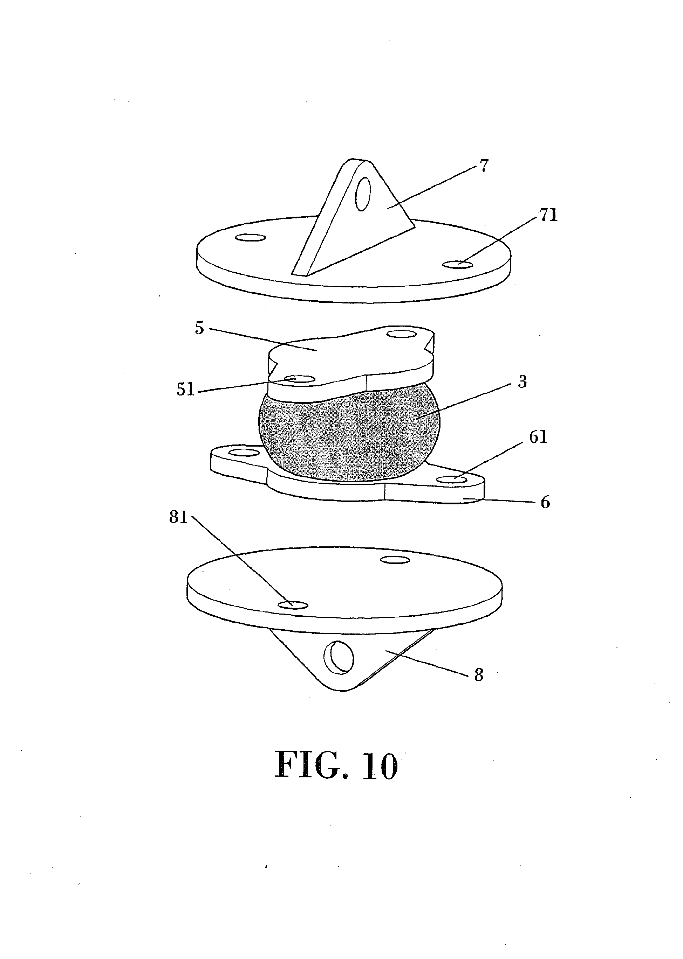

As observed in Figure 10, to arrange the elastic element (3) between the flanges (5) and (6), the latter can be arranged perpendicularly to one another and can have an elongated configuration with a discoid central part and two counterposed perforated tabs (51) and (61). On the other hand, the support members (7-8) can have holes (71-81) which are opposite the holes of the tabs (51-61) of the flanges (5-6), such that the ends of the mentioned rods (9) are fixed in the holes (51, 61, 71, 81).

The first and second support member (7-8) can in turn be indistinctly attached to the fixing means (2) for fixing to the fixed structure (22) and to the securing means (4) for the pipe (41). In Figure 1, it is observed that the first support member (7) is attached in an articulated manner to the fixing means (2) for fixing to the fixed structure (22), through a ring (11), and the second member (8) is attached in an articulated manner to the securing means (4) for the pipe (41), through the tie rod (10). To attach the tie rod (10) to the pipe (41), a yoke (42) can be used to which the ends of a clamp (43) trapping the pipe (41) are fixed. The attachment of the tie rod (10) to the second support element (8) can be performed through a ring (12). When for any reason, the pipe (41) shifts in any possible direction, the stresses will be absorbed by the elastic element (3) and by the entire system, which will move in the shift direction of the pipe (41).

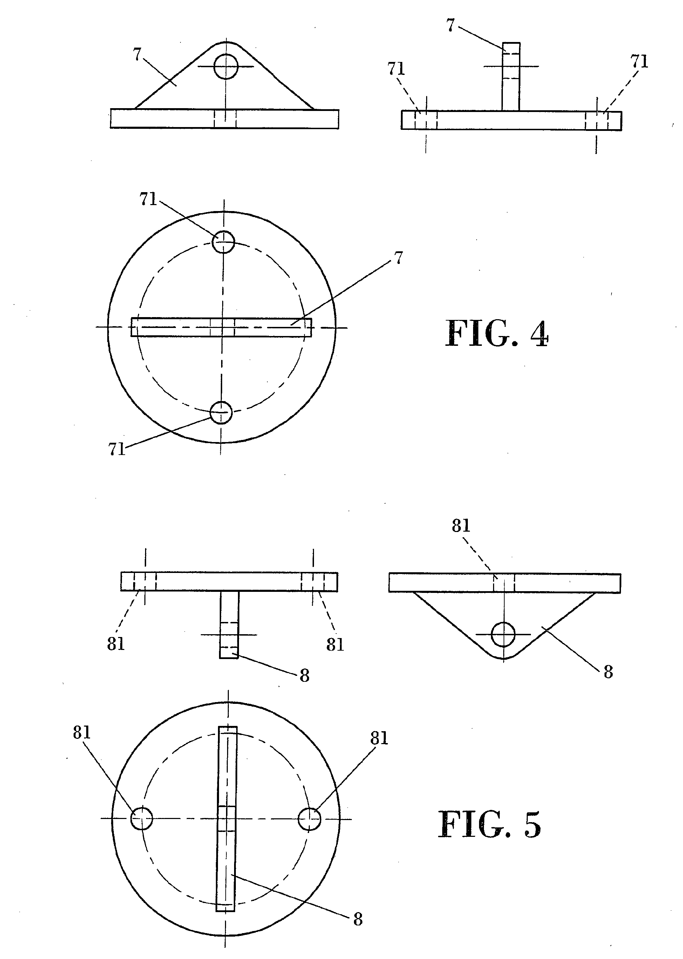

As observed in Figures 4 and 5, the support members (7-8) are identical and are provided with a diametric rib perforated on the face opposite the fixed structure (22) and the pipe (41).

Although it has not been depicted in the Figures, the first member (7) could be articulated to the securing means (4) for the pipe (41) through the tie rod (10) and the second member (8) could be articulated to the fixing means (2) for fixing to the structure (22).

In the system there are three articulation points, one point corresponds to the ring (11) which is attached to the fixed structure (22), which allows the movement of the first support member (7), which in turn allows the movement of the first flange (5), another articulation point corresponds to the ring (12) attaching the tie rod (10) and the second support member (8), which allows the movement of the mentioned member (8) and thus the movement of the second flange (6), and the other articulation point corresponds to the yoke (42) which is articulated to the tie rod (10). On the other hand, the arrangement of the elastic element (3) between the flanges (5-6) and the attachment of the mentioned flanges (5-6) to the support members (7-8) through the rods (9) enables the elastic element (3) to absorb the stresses occurring in any direction.

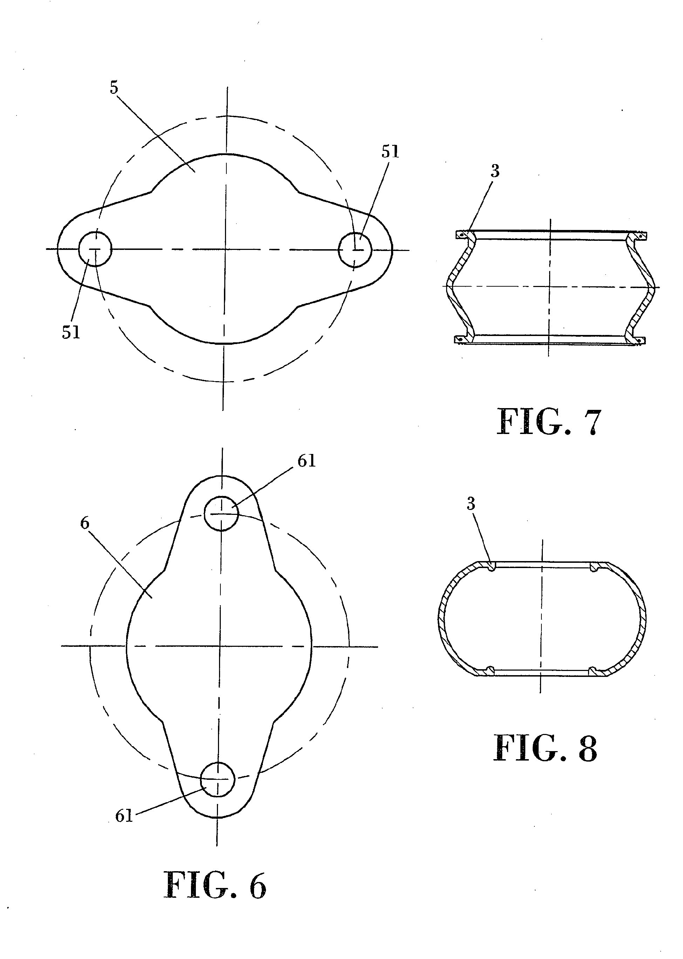

As observed in Figure 8, the elastic element (3) can be an impermeable and elastic body of revolution, with a wheel shape, with the bases open and with an inner circumferential rib in the bases. But other configurations could also be possible, such as the one observed in Figure 7, in which the elastic element (3) is a body of revolution with a bellows shape and an outer perimetric rim in the bases.

## Claims

1. Device (1) for supporting industrial pipes which device comprises:
- fixing means (2) for fixing to a fixed structure (22),
- securing means (4) for a pipe (41),
- an elastic element (3) located between the fixing means (2) for fixing to the fixed structure (22) and the securing means (4) for the pipe (41),
wherein the elastic element is made of rubber and is arranged between a first flange (5) attached to a first support member (7) and a second flange (6) attached to a second support member (8), the elastic element (3) being configured by an impermeable and elastic body of revolution open at its upper and lower base, through which bases it is attached to the first flange (5) and to the second flange (6), configuring a closed and hermetic volume containing a pressurized fluid, wherein the first flange (5) and the second flange (6) have an elongated configuration, with a widened central part and two counterposed perforated tabs (51-61).

2. Device (1) for supporting industrial pipes according to claim 1. **characterized in that** the attachment of the elastic element (3) to the fixing means (2) for fixing to the fixed structure (22) and to the securing means (4) for the pipe (41), is carried out indistinctly through the first support member (7) or the second support member (8).

3. Device (1) for supporting industrial pipes according to claim 1 and 2, **characterized in that** the first support member (7) and the second support member (8) are attached to the fixing means (2) and to the securing means (4) for the pipe (41) through means allowing the attachment to be articulated.

4. Device (1) for supporting industrial pipes according to claim 1, **characterized in that** the first flange (5) and the second flange (6) are perpendicularly positioned, such that each of the flanges (5-6) is attached by means of at least one pair of rods (9) to one of the support members (7-8), for which both support members (7-8) have holes (71-81) opposite the holes of the tabs (51-61) of the flanges (5-6), in which holes the ends of the rods (9) are fixed.

5. Device (1) for supporting industrial pipes according to claim 4, **characterized in that** the rods (9) are threaded rods and they are fastened to the flanges (5-6) and support members (7-8) by means of a nut-counternut.

6. Device (1) for supporting industrial pipes according to claim 1 and 2, **characterized in that** the pipe (41) hangs from a tie rod (10) attached at one end to the securing means (4) for the pipe (41) and attached at the other end, in an articulated manner, to the elastic element (3) indistinctly through the first or second support member (7-8).

7. Device (1) for supporting industrial pipes according to claim 1, **characterized in that** the pressurized fluid contained in the elastic element (3) is a gas.

8. Device (1) for supporting industrial pipes according to claim 1, **characterized in that** the elastic element (3) contains a fixed and constant amount of the pressurized fluid.

9. Device (1) for supporting industrial pipes according to claim 1, **characterized in that** the elastic element (3) is connected to an equalizing outer valve for maintaining the internal pressure constant.

10. Device (1) for supporting industrial pipes according to claim 1, **characterized in that** the elastic element (3) is connected to an outer valve for supplying the pressure required at all times to the elastic element (3).

## Patentansprüche

1. Vorrichtung (1) für die Abstützung von industriellen Rohren, die Folgendes umfasst:
- Befestigungsmittel (2) für die Befestigung an eine feste Struktur (22),
- Sicherungsmittel (4) für ein Rohr (41),
- ein elastisches Element (3), das sich zwischen den Befestigungsmitteln (2) für die Befestigung an eine feste Struktur (22) und den Sicherungsmitteln (4) für ein Rohr (41) befindet,
dabei ist das elastische Element (3) aus Gummi und ist zwischen einem ersten Flansch (5), das an ein festes Stützelement (7) angebracht ist, und einem zweiten Flansch (6), das an ein zweites Stützelement (7) angebracht ist, angeordnet, wobei das elastische Element (3) aus einem undurchlässigen und elastischen Rotationskörper gebildet wird, das an seiner oberen und unteren Boden offen ist, und durch diese Böden an den ersten Flansch (5) angebracht ist, die einen geschlossenen und hermetischen Inhalt bilden, der eine unter Druck stehende Flüssigkeit enthält, wobei der erste Flansch (5) und der zweite Flansch (6) eine längliche Gestalt haben, mit einem verbreiterten mitleren Teil und zwei entgegen gestellten perforierten Flügeln (51-61).

2. Vorrichtung (1) für die Abstützung von Industrierohren, entsprechend Anspruch 1, **dadurch gekennzeichnet, dass** die Anbringung des elastischen Elements (3) an den Befestigungsmitteln (2) für die Befestigung der festen Struktur (22) und an den Sicherungsmitteln (4) für das Rohr (41) unterschiedslos durch das erste Stützelement (7) oder das zweite Stützelement (8) erfolgt.

3. Vorrichtung (1) für die Abstützung von Industrierohren, entsprechend Anspruch 1 und 2, **dadurch gekennzeichnet, dass** das erste Stützelement (7) und das zweite Stützelement (8) an den Befestigungsmitteln (2) und an den Sicherungsmitteln (4) für das Rohr (41) durch Mittel, die eine gelenkartige Anbringung erlauben, angebracht sind.

4. Vorrichtung (1) für die Abstützung von Industrierohren, entsprechend Anspruch 1, **dadurch gekennzeichnet, dass** der erste Flansch (5) und der zweite Flansch (6) senkrecht positioniert sind, so dass jeder der Flansche (5-6) mit Hilfe von mindestens einem Paar von Stäben (9) an eines der Stützelemente (7-8) angebracht ist, wofür beide Stützelemente (7-8) Löcher (71-81) gegenüber den Löchern der Flügel (51-61) der Flansche (5-6) haben, wobei in diesen Löchern die Enden des Stäbe (9) befestigt werden.

5. Vorrichtung (1) für die Abstützung von Industrierohren, entsprechend Anspruch 4, **dadurch gekennzeichnet, dass** die Stäbe (9) Stäbe mit Gewinde sind und an die Flansche (5-6) und die Stützelemente (7-8) mit Hilfe einer Mutter und einer Gegenmutter befestigt sind.

6. Vorrichtung (1) für die Abstützung von Industrierohren, entsprechend Anspruch 1 und 2, **dadurch gekennzeichnet, dass** das Rohr (41) von einer Zugstange (10) hängt, die an einem Ende der Sicherungsmittel (4) für das Rohr (41) sowie am anderen Ende angebracht ist, und zwar gelenkartig an das elastische Elerment (3), unterschiedslos durch das erste oder zweite Stützelement (7-8).

7. Vorrichtung (1) für die Abstützung von Industrierohren, entsprechend Anspruch 1, **dadurch gekennzeichnet, dass** die in dem elastischen Element (3) enthaltene unter Druck stehende Flüssigkeit ein Gas ist.

8. Vorrichtung (1) für die Abstützung von Industrierohren, entsprechend Anspruch 1, **dadurch gekennzeichnet, dass** das elastische Element (3) eine festgelegte und konstante Menge an unter Druck stehender Flüssigkeit enthält.

9. Vorrichtung (1) für die Abstützung von Industrierohren, entsprechend Anspruch 1, **dadurch gekennzeichnet, dass** das elastische Element (3) mit einem äußeren Ausgleichsventil um den inneren Druck konstant zu halten.

10. Vorrichtung (1) für die Abstützung von Industrierohren, entsprechend Anspruch 1, **dadurch gekennzeichnet, dass** das elastische Element (3) mit einem äußeren Ausgleichsventil zur Unterstützung des Drucks verbunden ist, der zu jedem Zeitpunkt an dem elastischen Element (3) erforderlich ist.

## Revendications

1. Dispositif (1) pour supporter des tuyaux industriels, qui comprend:
des moyens de fixation (2) pour la fixation à une structure fixe (22),
des moyens de fixation (4) pour un tuyau (41),
un élément élastique (3) situé entre les moyens de fixation (2),
pour la fixation à la structure fixe (22) et les moyens de fixation (4) pour le tuyau (41),
où l'élément élastique est fait en caoutchouc et est disposé entre une première flasque (5) fixée à un premier membre support (7) et une deuxième flasque (6) fixée à un deuxième membre support (8), l'élément élastique (3) étant composé d'un corps imperméable et élastique à rotation ouverte sur sa base supérieure et inférieure, bases par lesquelles il est attaché à la première flasque (5) et à la deuxième flasque (6), composant un volume fermé et hermétique contenant un fluide sous pression, où la première flasque (5) et la deuxième flasque (6) ont une configuration allongée, avec une partie centrale élargie et deux onglets perforés opposés (51, 61).

2. Dispositif (1) pour supporter des tuyaux industrielsconformément à la revendication 1, **caractérisé par le fait que** la fixation de l'élément élastique (3) aux moyens de fixation (2) pour le fixer à la structure fixe (22) et aux moyens de fixation (4) pour le tuyau (41) est réaliséindistinctement par le premier membre de support (7) ou le deuxième membre de support (8).

3. Dispositif (1) pour supporter des tuyaux industrielsconformément aux revendications 1 et 2, **caractérisé par le fait que** le premier membre de support (7) et le deuxième membre de support (8) sont fixés aux moyens de fixation (2) et aux moyens de fixation (4) pour le tuyau (41) par des moyens permettant l'articulation de la fixation.

4. Dispositif (1) pour supporter des tuyaux industrielsconformément à la revendication 1, **caractérisé par le fait que** la première flasque (5) et la deuxième flasque (6) sont placées perpendiculairement, de telle sorte que chacune des flasques (5, 6) est fixée au moyen d'au moins une paire de tiges (9) à l'un des membres de support (7, 8) pour lequel les deux membres de support (7, 8) ont des orifices (71, 81) opposés aux orifices des onglets (51, 61) des flasques (5, 6), orifices dans lesquels les extrémités des tiges (9) sont fixées.

5. Dispositif (1) pour supporter des tuyaux industrielsconformément à la revendication 4, **caractérisé par le fait que** les tiges (9) sont des tiges filetées et sont fixées aux flasques (5, 6) et aux membres de support (7, 8) au moyen d'un écrou contre-écrou.

6. Dispositif (1) pour supporter des tuyaux industriels conformément à la revendication 1 et 2, **caractérisé par le fait que** le tuyau (41) pend d'une tige (10) attachée à une extrémité du moyen de fixation (4) pour le tuyau (41) et attachée à l'autre extrémité, de manière articulée, à l'élément élastique (3) indistinctement par le premier ou le deuxième membre de support (7, 8).

7. Dispositif (1) pour supporter des tuyaux industriels conformément à la revendication 1, **caractérisé par le fait que** le fluide sous pression contenu dans l'élément élastique (3) est un gaz.

8. Dispositif (1) pour supporter des tuyaux industriels conformément à la revendication 1, **caractérisé par le fait que** l'élément élastique (3) contient une quantité fixe et constante de fluide sous pression.

9. Dispositif (1) pour supporter des tuyaux industriels conformément à la revendication 1, **caractérisé par le fait que** l'élément élastique (3) est connecté à une soupape d'échappement d'égalisation pour maintenir la pression interne constante.

10. Dispositif (1) pour supporter des tuyaux industriels conformément à la revendication 1, **caractérisé par le fait que** l'élément élastique (3) est connecté à une soupape d'échappement pour fournir la pression nécessaire à tout moment à l'élément élastique (3).
